# EUROPEAN PATENT APPLICATION

(11) **EP 4 398 447 A1**
(43) Date of publication of application: **10.07.2024**
(21) Application number: 23801292.6
(22) Date of filing: 15.11.2023
(51) Int. Cl.: H02J 7/00, H02P 7/00, H01M 10/44, G09G 5/10

(54) **ELECTRONIC DEVICE, AND POWER CONTROL METHOD BASED ON PLURALITY OF BATTERIES IN ELECTRONIC DEVICE**

(30) Priority: 15.11.2022 KR 20220152563; 23.12.2022 KR 20220183110
(71) Applicant: Samsung Electronics Co., Ltd., Suwon-si, Gyeonggi-do 16677 (KR)
(72) Inventor: KIM, Heetae, Suwon-si, Gyeonggi-do 16677 (KR); KIM, Minsu, Suwon-si, Gyeonggi-do 16677 (KR); BAE, Chanjung, Suwon-si, Gyeonggi-do 16677 (KR)
(74) Representative: Arnold & Siedsma
(86) International application number: PCT/KR2023/018379
(87) International publication number: WO 2024/106949

(57) **Abstract**

An electronic device according to an embodiment may include a first battery, a second battery, charging circuitry, a processor, a first fuel gauge connected to the first battery and the charging circuitry, monitoring usage state information with respect to the first battery, and comprising a first switch for charging or discharging the first battery, and a second fuel gauge connected to the second battery and the charging circuitry, monitoring usage state information with respect to the second battery, and comprising a second switch for charging or discharging the second battery, wherein the processor is configured to control the first fuel gauge to provide power of the first battery to at least one first electrical component through the first switch, and to control the second fuel gauge to provide power of the second battery to at least one electrical second component through the second switch.

## Description

### [Technical Field]

The disclosure relates to a method for controlling power based on multiple batteries in an electronic device.

### [Background Art]

The use of portable electronic devices such as a smartphone, a tablet PC, a wearable device, and augment glass (AR glass) has been increased and rapid increase in the use of electronic devices may lead to active research on batteries to extend usage time. The electronic devices may be realized to use multiple batteries to receive power.

### [Disclosure]

### [Technical Problem]

An electronic device may include multiple batteries and multiple circuit boards for various functions. According to an embodiment, it is necessary to prevent the electronic device and the batteries from burning out due to flow of an excessive load current while effectively distributing power provided from each of the multiple batteries to electric components or electric elements included in each of the plurality of circuit boards through an optimum power transfer path.

### [Technical Solution]

An electronic device according to an embodiment may include a first battery, a second battery, charging circuitry, a processor, a first fuel gauge connected to the first battery, monitoring usage state information with respect to the first battery, and the charging circuitry and including a first switch for charging or discharging the first battery, and a second fuel gauge connected to the second battery and the charging circuitry, monitoring usage state information with respect to the second battery, and including a second switch for charging or discharging the second battery. In the electronic device according to an embodiment, the processor is configured to control the first fuel gauge to provide power of the first battery to at least one first electrical component through the first switch, and the processor is configured to control the second fuel gauge to provide power of the second battery to at least one second electrical second component through the second switch.

A method for controlling power based on multiple batteries in an electronic device according to an embodiment may include an operation of receiving a first interrupt signal corresponding to a first overcurrent related to a first battery from a first fuel gauge or a second interrupt signal corresponding to a second overcurrent related to a second battery from a second fuel gauge. The method according to an embodiment may include an operation of identifying the first overcurrent based on the first interrupt signal corresponding to the first overcurrent related to the first battery or identifying the second overcurrent based on the second interrupt signal corresponding to the second overcurrent related to the second battery. The method according to an embodiment may include an operation of performing a designated function based on the identification of the first overcurrent or the second overcurrent.

A non-transitory recording medium storing instructions according to an embodiment, which, when executed by an electronic device, cause the electronic device to perform at least one operation, wherein the at least one operation may include an operation of receiving a first interrupt signal corresponding to a first overcurrent related to a first battery from a first fuel gauge or a second interrupt signal corresponding to a second overcurrent related to a second battery from a second fuel gauge. The at least one operation according to an embodiment may include an operation of identifying the first overcurrent based on the first interrupt signal corresponding to the first overcurrent related to the first battery or identifying the second overcurrent based on the second interrupt signal corresponding to the second overcurrent related to the second battery. The at least one operation according to an embodiment may include an operation of performing a designated function based on the identification of the first overcurrent or the second overcurrent.

### [Description of Drawings]

FIG. 1 is a block diagram illustrating an electronic device in a network environment according to an embodiment.
FIG. 2 is a block diagram illustrating an electronic device including multiple batteries according to an embodiment.
FIG. 3A is a block diagram illustrating an electronic device including multiple batteries and multiple fuel gauges according to an embodiment.
FIG. 3B is a circuit illustrating a first fuel gauge according to an embodiment.
FIG. 4 is a block diagram illustrating an electronic device including multiple batteries, multiple fuel gauges, and a processor according to an embodiment.
FIG. 5 is a block diagram illustrating an electronic device according to an embodiment.
FIG. 6 is a flowchart of a method for controlling power based on multiple batteries in an electronic device according to an embodiment.
FIG. 7 is a view illustrating a flat state of a foldable electronic device according to an embodiment.
FIG. 8 is a view illustrating a folded state of a foldable electronic device according to an embodiment.
FIG. 9 is an exploded perspective view illustrating a foldable electronic device according to an embodiment.

### [Mode for Invention]

Terms used in this disclosure are used to describe specified embodiments and may not be intended to limit the scope of another embodiment. The terms of a singular form may include plural forms unless they have a clearly different meaning in the context. All the terms used herein, which include technical or scientific terms, may have the same meaning that is generally understood by a person skilled in the art. It will be further understood that terms, which are defined in a dictionary and commonly used, should also be interpreted as being customary in the relevant related art and not in an idealized or overly formal unless expressly so defined in various embodiments of the disclosure. In some cases, terms, even if defined in the disclosure, may not be interpreted to exclude embodiments of the disclosure.

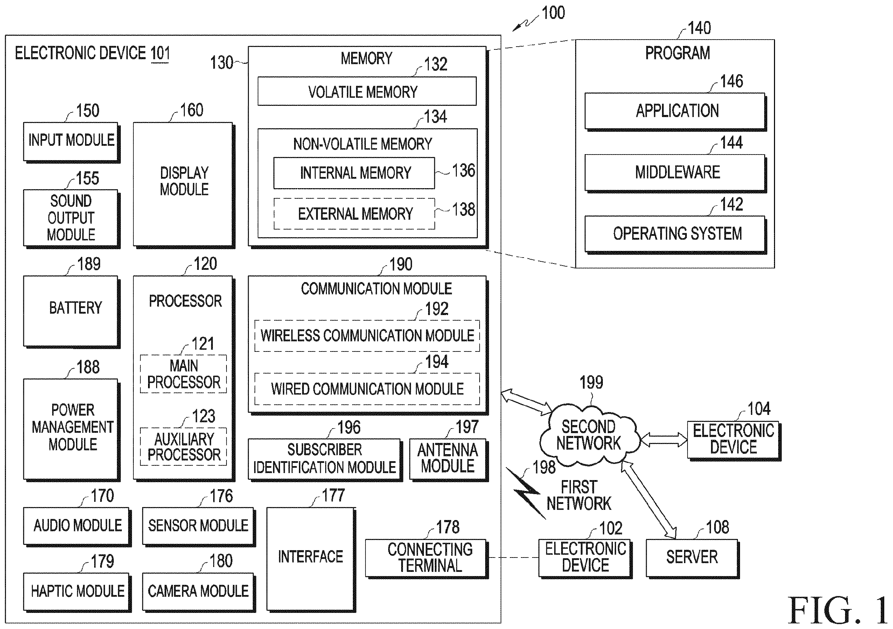

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

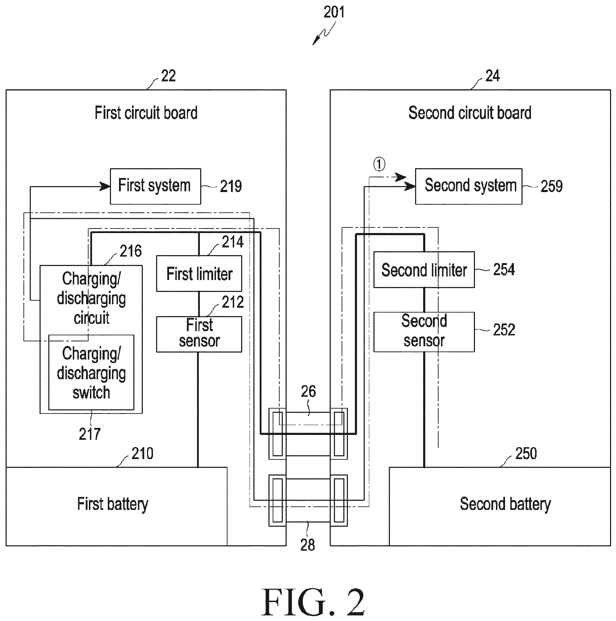

FIG. 2 is a block diagram illustrating an electronic device 201 including multiple batteries according to an embodiment.

Referring to FIG. 2, the electronic device 201 according to an embodiment may include a first circuit board 22, a second circuit board 24, a first connector 26, a second connector 28, a first battery 210, a second battery 250, a first sensor 212, a second sensor 252, a first limiter 214, a second limiter 254, a charging/discharging circuit 216, a charging/discharging switch 217, a first system 219, and/or a second system 259.

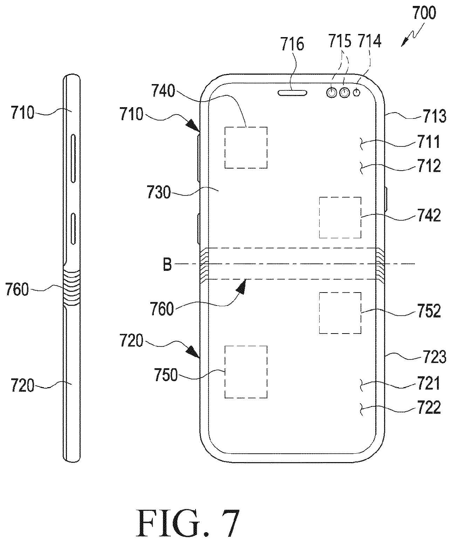

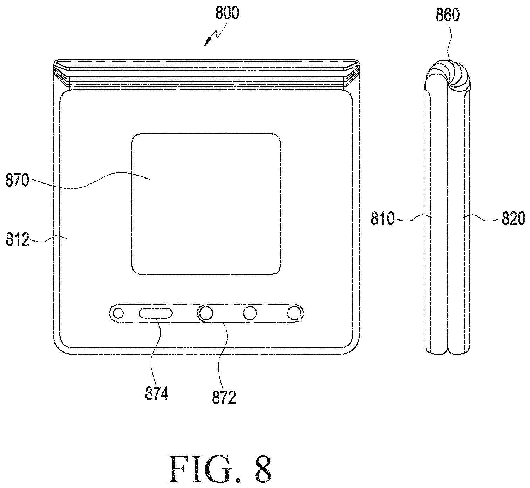

Without limitation thereto, the electronic device 201 may be configured to additionally include various components or omit some of the components. The electronic device 201 according to an embodiment may further include the entirety or some of the electronic device 101 shown in FIG. 1. According to an embodiment, the electronic device 201 may be applied to a foldable phone (or flip phone) (e.g., the electronic device 700 in FIG. 7 or the electronic device 800 in FIG. 8). According to an embodiment, when the electronic device 201 is applied to the foldable phone, the electronic device 201 may further include a first housing(eg, the first housing structure 710 in FIG. 7 or the first housing structure 810 in FIG. 8 ) including the first circuit board 22, a second housing (eg, the second housing structure 720 in FIG. 7 or the second housing structure 820 in FIG. 8) including a second circuit board 24, a hinge structure (eg, the hinge structure 760 in FIG. 7 or the hinge structure 860 in FIG. 8 ) connected between the first housing and the second housing. According to one embodiment, the first housing, the second housing and the hinge structure can be configured such that the first circuit board 22 and the second circuit board 24, which are separated or separated from each other, are electrically connected through the first connector 26 and the second connector 28.

The first circuit board 22 and the second circuit board 24 according to an embodiment may include a printed circuit board (PCB) or a flexible printed circuit board (FPCB) and may include (or provided with) electric components (or modules)(or electric elements) (e.g., the first system 219 and the second system 259) required for an operation of the electronic device 201. For example, the first circuit board 22 may include the first system 219 (e.g., at least one first electric component (or at least one first electric element) required for an operation of the electronic device 201) and the second circuit board 24 may include the second system 259 (e.g., at least one second electric component (or at least one second electric element) required for an operation of the electronic device 201).

The first connector 26 and the second connector 28 according to an embodiment may correspond to connection parts for connecting a wire (or an electrical path) between the first circuit board 22 and the second circuit board 24. The first connector 26 may be a connection part for connecting a first wire related to charging/discharging of the first battery 210 and the second battery 250. The second connector 28 may be a connection part for connecting a second wire related to power supplying to the second system 259.

Each of the first battery 210 and the second battery 250 according to an embodiment may correspond to a battery housed in the electronic device 201 in an integral form with the electronic device 201 or detachably attached to the electronic device. Each of the first battery 210 and the second battery 250 according to an embodiment may be charged according to charging current supply or discharged by providing charged power to the electronic device 201. The first battery 210 according to an embodiment may be connected to the first circuit board 22 and the second battery 250 may be connected to the second circuit board 24.

Each of the first battery 210 and the second battery 250 according to an embodiment may supply power to a main body (or the first system 219 and/or the second system 259 included in the electronic device 201) of the electronic device 201 or may be charged by using power provided from an external power source through the charging/discharging circuit 216. Charge capacities of the first battery 210 and the second battery 250 according to an embodiment may be identical to or different from each other. For example, a charge capacity of the first battery 210 (e.g., a main battery) may be larger than that of the second battery 250 (e.g., a sub-battery).

The first sensor 212 (e.g., a first current sensor) and the second sensor 252 (e.g., a second current sensor) according to an embodiment may be configured to measure currents (and/or voltages) with respect to the first battery 210 and the second battery 250, respectively. According to an embodiment the electronic device 201 may further include an additional sensor for measuring a temperature of each of the first battery 210 and the second battery 250 in addition to the first sensor 212 and the second sensor 252. The first sensor 212 and the second sensor 252 according to an embodiment may measure a current, a voltage, and a temperature of each of the first battery 210 and the second battery 250 in real time or periodically or repetitively or based on occurrence of an event, a measurement period with respect to one of the current, the voltage, and the temperature may be the same as or different from that of the others.

The first limiter 214 according to an embodiment may include a switch and perform switching for connecting or releasing connection between the first battery 210 and the charging/discharging circuit 216 between the first battery 210 and the charging/discharging circuit 216. According to the switching operation of the first limiter 214 according to an embodiment, a charging current flow provided from the first battery 210 or provided to the first battery 210 may be blocked or unblocked. For example, the first limiter 214 may include a switch for performing a turn on or turn off operation.

The second limiter 254 according to an embodiment may perform switching for connecting or releasing connection between the second battery 250 and the charging/discharging circuit 216 between the second battery 250 and the charging/discharging circuit 216. According to the switching operation of the second limiter 254, a charging current flow provided from the second battery 250 or provided to the second battery 250 may be blocked or unblocked. For example, the second limiter 254 may include a switch for performing a turn on or turn off operation.

The charging/discharging circuit 216 (e.g., a charging IC) according to an embodiment may include a charging/discharging switch (or switches) 217 for performing a charging operation or a discharging operation with respect to the first battery 210 and/or the second battery 250. The charging/discharging circuit 216 may be configured to selectively execute a charging operation and a discharging operation with respect to the first battery 210 and/or the second battery 250. The charging/discharging circuit 216 may convert power supplied from an external power supply device (or an external power source) through an interface (not shown) (e.g., a wired charging interface and/or a wireless charging interface) to a voltage (and/or a current) corresponding to the first battery 210 and/or the second battery 250 to be supplied to the first battery 210 and/or the second battery 250. The charging/discharging circuit 216 may supply power supplied from the first battery 210 or the second battery 250 through the charging/discharging switch 217 to a main body of the electronic device 201, for example, each component (e.g., the first system 219 and/or the second system 259) or supply power supplied from the first battery 210 to the second battery 250. According to an embodiment, the charging/discharging switch 217 may perform a switching operation for allowing that the charging/discharging circuit 216 supply power to the first battery 210 and/or the second battery 250 or adjusts power or a current supplied from the first battery 210 and/or the second battery 250 based on a control signal output from a processor (e.g., the processor 120 in FIG. 1).

The charging/discharging circuit 216 according to an embodiment may control, based on a comparison result between a charge capacity of the second battery 250 and a designated threshold charge capacity range, turning on or turning off of the first limiter 214 for performing switching between the first battery 210 and the charging/discharging circuit 216 and a second limiter 254 for performing switching between the second battery 250 and the charging/discharging circuit 216. According to an embodiment, the turning on or turning off of the first limiter 214 and the second limiter 254 may be controlled by a processor (e.g., the processor 120 in FIG. 1).

In the electronic device 201 shown in FIG. 2 according to an embodiment, the charging/discharging circuit 216 may distinguish a overcurrent based on a current (an integrated current by the first battery 210 and the second battery 250) transferred through the charging/discharging switch 217 and transfer overcurrent occurrence to the processor (e.g., 120) so as to perform an operation for lowering an overcurrent according to a control signal from the processor. An overcurrent may cause a misoperation of the electronic device 201 or damage to the battery and thus in case that an overcurrent occurs in the electronic device 201, protection circuit modulation (PCM) blocking or a sudden momentary power loss (SMPL) reset may occur in the electronic device 201. In case that the protection circuit modulation (PCM) blocking or the sudden momentary power loss (SMPL) reset occurs, the electronic device 201 may be powered off and thus a control operation of lowering an overcurrent may be important.

For example, A longer a distance between the first battery 210 (and/or the second battery 250) and at least one electric component (or at least one electric element)(e.g, the first system 219 or the second system 259) to receive a current from the first battery 210(and/or the second battery 250), a length of a power transfer path (e.g., a power line) may increase. According to an embodiment, as the length of the power transfer path increases, an internal resistance of the power transmission path may increase to cause an overcurrent, and the overcurrent may cause the PCM blocking or the SMPL reset in the electronic device 201.

For example, in FIG. 2, a power transfer path (①) through the second limiter 254, the first connector 26, charging/discharging circuit 216, and the second connector 28 may be formed to cause a current to be transferred from the second battery 250 to the second system 259 and in case that a distance of the power transfer path ((I)) may be reduced, overcurrent occurrence may be reduced and effective power transfer may be possible.

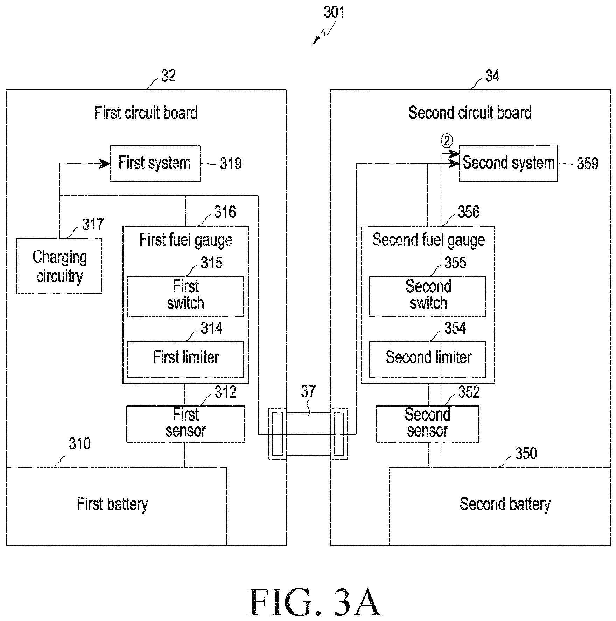

FIG. 3A is a block diagram illustrating an electronic device including multiple batteries and multiple fuel gauges according to an embodiment.

Referring to FIG. 3A, the electronic device 301 (e.g., the electronic device 101 in FIG. 1) according to an embodiment may include a first battery 310, a second battery 350, a first fuel gauge 316, a second fuel gauge 356, a charging circuit 317, a first system 319, and/or a second system 359. According to an embodiment, the electronic device 301 may further include a first circuit board 32, a second circuit board 34, a connector 37, a first sensor 312 and/or a second sensor 352,

Without limitation thereto, the electronic device 301 according to an embodiment may be configured to additionally include various components or omit some of the components. The electronic device 301 according to an embodiment may further include the entirety or some of the electronic device 101 shown in FIG. 1. According to an embodiment, the electronic device 301 may be applied to a foldable phone (or flip phone) (e.g., the electronic device 700 in FIG. 7 or the electronic device 800 in FIG. 8). According to an embodiment, when the electronic device 301 is applied to the foldable phone(or flip phone), the electronic device 301 may further include a first housing (e. g, the first housing structure 710 in FIG. 7 or the first housing structure 810 in FIG. 8 ) including the first circuit board 32, a second housing (e. g, the second housing structure 720 in FIG. 7 or the second housing structure 820 in FIG. 8) including a second circuit board 34, and a hinge structure (e. g, the hinge structure 760 in FIG. 7 or the hinge structure 860 in FIG. 8 ) connected between the first housing and the second housing. According to one embodiment, the first housing, the second housing and the hinge structure can be configured such that the first circuit board 32 and the second circuit board 34, which are separated or separated from each other, are electrically connected through the connector 37.

The first circuit board 32 and the second circuit board 34 according to an embodiment may include a printed circuit board (PCB) or a flexible printed circuit board (FPCB) and may include (or provided with) electrical components (or electrical modules, or electrical elements) (e.g., the first system 319 and the second system 359) required for an operation of the electronic device 301. For example, the first circuit board 32 may include the first system 319 (e.g., some of electrical components (or electrical modules or electrical elements) required for an operation of the electronic device 301) and the second circuit board 34 may include the second system 359 (e.g., some of other electrical components (or electrical modules or electrical elements) required for an operation of the electronic device 301). According to an embodiment, the first system 319 includes at least one first electrical element or at least one first electrical component. According to an embodiment, the second system 359 includes at least one second electrical element or at least one second electrical component. For example, the first system 319 includes at least part of electrical elements or electrical components included in the electronic device 101 of the FIG. 1, and the second system 359 includes at least another part of the electrical elements or the electrical components included in the electronic device 101 of the FIG. 1. The connector 37 according to an embodiment may correspond to a connection part for connecting a wire (or an electrical path) related to power transfer between the first circuit board 32 and the second circuit board 34.

Each of the first battery 310 and the second battery 350 according to an embodiment may correspond to a battery housed in the electronic device 301 in an integral form with the electronic device 301 or detachably attached to the electronic device. Each of the first battery 310 and the second battery 350 according to an embodiment may be charged according to charging current supply or discharged by providing charged power to the electronic device 301. The first battery 310 according to an embodiment may be connected to the first circuit board 32 and the second battery 350 may be connected to the second circuit board 34.

Each of the first battery 310 and the second battery 350 according to an embodiment may supply power to a main body (or the first system 319 and/or the second system 359 included in the electronic device 301) of the electronic device 301 or may be charged by using power provided from an external power source through the charging circuit 317. Charge capacities of the first battery 310 and the second battery 350 according to an embodiment may be identical to or different from each other. For example, a charge capacity of the first battery 310 (e.g., a main battery) may be larger than that of the second battery 350 (e.g., a sub-battery).

The first sensor 312 (e.g., a first current sensor) and the second sensor 352 (e.g., a first current sensor) according to an embodiment may be configured to measure currents (and/or voltages) with respect to the first battery 310 and the second battery 350, respectively. According to an embodiment the electronic device 301 may further include an additional sensor for measuring a temperature of each of the first battery 310 and the second battery 350 in addition to the first sensor 312 and the second sensor 352. The first sensor 312 and the second sensor 352 according to an embodiment may measure a current (or a voltage or a temperature) of each of the first battery 310 and the second battery 350 in real time or periodically or repetitively or based on occurrence of an event, a measurement period with respect to one of the current, the voltage, and the temperature may be the same as or different from that of the others.

The first fuel gauge (or a first power gauge) 316 according to an embodiment may measure or monitor usage state information (e.g., a capacity, charging/discharging numbers, a voltage, or a temperature of the first battery 310) with respect to the first battery 310. The first fuel gauge 316 according to an embodiment may also be referred to as a first circuit. The first circuit may be a circuit capable of measuring state information of the first battery 310 and performing switching for charging or discharging the first battery 310.

The first fuel gauge 316 according to an embodiment may include the first limiter 314 and the first switch 315 and control the first limiter 314 and the first switch 315. According to an embodiment, the first switch 315 may be realized to perform functions of each of the first limiter 314 and the first switch 315 together and the first fuel gauge 316 may control the first switch 315. According to an embodiment, the first fuel gauge 316 may control that the first electrical power of the first battery 310 is provided to the first system 319 (or the first path or the first electrical wire corresponding to the first system 319) through the first switch 315.

The first limiter 314 according to an embodiment may include a switch and perform switching for connecting or releasing connection between the first battery 310 and the first circuit 315. According to the switching operation of the first limiter 314 according to an embodiment, a charging current flow provided from the first battery 310 or provided to the first battery 310 may be blocked or unblocked.

The first switch 315 according to an embodiment may supply power supplied from the first battery 310 to a main body of the electronic device 301, for example, each component (e.g., the first system 319 and/or the second system 359) or supply power supplied from the first battery 310 to the second battery 350. According to an embodiment, the first switch 315 may perform a switching for being supplied power to the first battery 310 or being adjusted power or a current supplied from the first battery 310 based on a control signal output from the first fuel gauge 316 (or a processor (e.g., the processor 120 in FIG. 1)).

The second fuel gauge (or a second power gauge) 356 according to an embodiment may measure or monitor usage state information (e.g., a capacity, charging/discharging numbers, a voltage, or a temperature of the second battery 350) with respect to the second battery 350. The second fuel gauge 356 according to an embodiment may also be referred to as a second circuit. The second circuit may be a circuit capable of measuring state information of the second battery 350 and performing switching for charging or discharging the second battery 350.

The second fuel gauge 356 according to an embodiment may include the second limiter 354 and the second switch 355 and control the second limiter 354 and the second switch 355. According to an embodiment, the second fuel gauge 356 may control that the second electrical power of the second battery 350 is provided to the second system 359 (or the second path or the second electrical wire corresponding to the second system 359) through the second switch 355.

According to an embodiment, the second switch 355 may be realized to perform functions of each of the second limiter 354 and the second switch 355 together and the second fuel gauge 356 may control the second switch 355.

The second limiter 354 according to an embodiment may include a switch and perform switching for connecting or releasing connection between the second battery 350 and the second switch 355. According to the switching operation of the second limiter 354 according to an embodiment, a charging current flow provided from the second battery 350 or provided to the second battery 350 may be blocked or unblocked.

The second switch 355 according to an embodiment may supply power supplied from the second battery 350 to a main body of the electronic device 301, for example, each component (e.g., the first system 319 and/or the second system 359 supply power supplied from the first battery 310 to the second battery 350. According to an embodiment, the second switch 355 may perform a switching operation of supplying power to the second battery 350 according to a control signal output from the second fuel gauge 356 (or a processor (e.g., the processor 120 in FIG. 1)) or allowing power or a current supplied from the second battery 350 to be adjustable.

The charging circuit 317 (e.g., a charging IC) according to an embodiment may perform a charging operation with respect to the first battery 310 and/or the second battery 350. The charging circuit 317 may convert power supplied from an external power supply device (or an external power source) through an interface (e.g., the interface 177 in FIG. 1) (e.g., a wired charging interface and/or a wireless charging interface) to a voltage (and/or a current) corresponding to the first battery 310 and/or the second battery 350 to be supplied to the first battery 310 and/or the second battery 350.

In the electronic device 301 in FIG. 3A according to an embodiment, the first fuel gauge 316 may distinguish a first overcurrent related to the first battery 310 based on a current of the first battery 310 transferred through the first switch 315 and the second fuel gauge 356 may distinguish a second overcurrent related to the second battery 350 based on a current of the second battery 350 transferred through the second switch 355. The first fuel gauge 316 may transfer a first interrupt signal corresponding to the first overcurrent to a processor (e.g., the processor 120 in FIG. 1) and the second fuel gauge 356 may transfer a second interrupt signal corresponding to the second overcurrent to a processor (e.g., 120). The processor may perform a control operation for lowering the first overcurrent and/or the second overcurrent depending on the first interrupt signal and/or the second interrupt signal.

In FIG. 3A according to an embodiment, in case that a current is transferred from the second battery 350 to the second system 359, a power transfer path ((2)) may be formed through the second limiter 354 and the second switch 355 excluding the connector 37 and as a length of the power transfer path ((2)) is reduced compared to that(CD) of FIG. 2, the possibility of overcurrent occurrence may also be reduced.

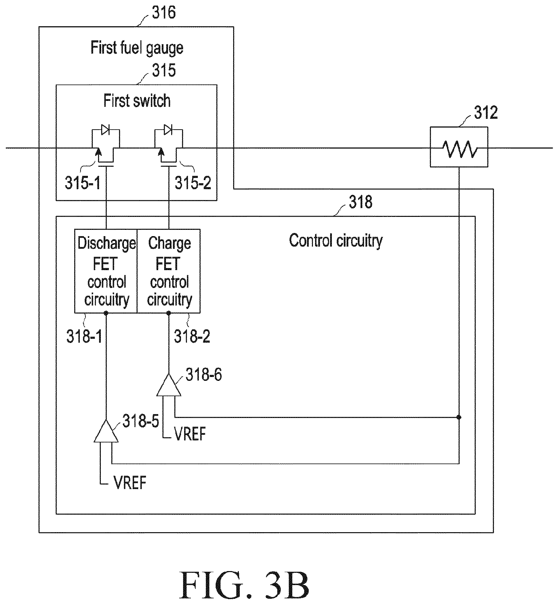

FIG. 3B is a circuit illustrating a first fuel gauge according to an embodiment.

Referring to FIG. 3B, the first fuel gauge 316 according to an embodiment may include the first switch 315 and control circuitry 318.

According to an embodiment, the control circuitry 318 may control the first switch 315.

According to an embodiment, the first switch 315 may include a discharging FET (or a first FET) 315-1 and a charging FET(or a second FET) 315-2. The discharging FET 315-1 according to an embodiment may perform switching such that current flows through a discharge path for the first battery 310. The charging FET 315-2 according to an embodiment may perform switching such that current flows through a charge path for the first battery 310.

According to an embodiment, the control circuitry 318 may include discharging FET control circuitry (or first FET control circuitry) 318-1, charging FET control circuitry (or second FET control circuitry) 318-2, a first comparator 318-5, and a second comparator 318-6. The first comparator 318-5 according to an embodiment may compare a first voltage sensed by the first sensor 312(e.g, a voltage sensor) based on current provided to the first switch 315 from the first battery 310 with a voltage corresponding to a designated allowable discharge current and output a first comparison result. The second comparator 318-6 according to an embodiment may compare a second voltage sensed by the first sensor 312(e.g, a voltage sensor) based on current provided to the first battery 310 from the first switch 315 with a voltage corresponding to a designated allowable charge current and output a second comparison result. The discharging FET control circuitry 318-1 according to an embodiment may control an operation of the first swith 315 based on the first comparison result. The charging FET control circuitry 318-2 according to an embodiment may control an operation of the first swith 315 based on the second comparison result. The control circuitry 318 according to an embodiment may provide the first interrupt signal corresponding to a first overcurrent to a processor (e.g, processor 320) when the current value of the first battery 310 is a first overcurrent exceeding a designated current value based on the first comparison result and/or the second comparison result. The second fuel gauge 356 according to an embodiment may include a circuit similar to the first fuel gauge 316 for the second battery 350 and provide the second interrupt signal corresponding to a second overcurrent to a processor (e.g, processor 320) when the current value of the second battery 350 is a second overcurrent exceeding a designated current value based on the first comparison result and/or the second comparison result.

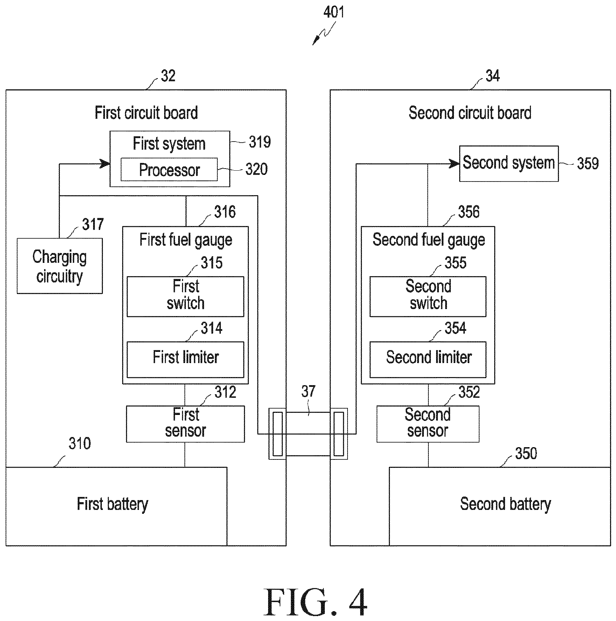

FIG. 4 is a block diagram illustrating an electronic device including multiple batteries, multiple fuel gauges, and a processor according to an embodiment.

Referring to FIG. 4, the electronic device 401 (e.g., the electronic device 101 in FIG. 1) according to an embodiment may include a first circuit board 32, a second circuit board 34, a connector 37, a first battery 310, a second battery 350, a first sensor 312, a second sensor 352, a first limiter 314, a first switch 315, a first fuel gauge 316, a second limiter 354, a second switch 355, a second fuel gauge 356, a charging circuit 317, a first system 319, a second system 359, and/or a processor 320.

Without limitation thereto, the electronic device 401 may be configured to additionally include various components or omit some of the components. The electronic device 401 according to an embodiment may further include the entirety or some of the electronic device 101 shown in FIG. 1.

According to an embodiment, the electronic device 401 may further include an additional battery (eg, a third battery), in addition to the first battery 310 and the second battery 350, and a third fuel gauge corresponding to the third battery. According to an embodiment, The number of the plurality of batteries may be two or more, and the number of the plurality of fuel gauges corresponding to the plurality of batteries may be two or more. According to an embodiment, the electronic device 401 may be applied to a foldable phone (or flip phone) (e.g., the electronic device 700 in FIG. 7 or the electronic device 800 in FIG. 8). According to an embodiment, when the electronic device 401 is applied to the foldable phone (or flip phone), the electronic device 401 may further include a first housing (e. g, the first housing structure 710 in FIG. 7 or the first housing structure 810 in FIG. 8 ) including the first circuit board 32, a second housing (e. g, the second housing structure 720 in FIG. 7 or the second housing structure 820 in FIG. 8) including a second circuit board 34, and a hinge structure (eg, the hinge structure 760 in FIG. 7 or the hinge structure 860 in FIG. 8 ) connected between the first housing and the second housing. According to one embodiment, the first housing, the second housing and the hinge structure can be configured such that the first circuit board 32 and the second circuit board 34, which are separated or separated from each other, are electrically connected through the connector 37.

In the electronic device 401 according to an embodiment, the first circuit board 32, the second circuit board 34, the connector 37, the first battery 310, the second battery 350, the first sensor 312, the second sensor 352, the first limiter 314, the first switch 315, the first fuel gauge 316, the second limiter 354, the second switch 355, the second fuel gauge 356, the charging circuit 317, the first system 319, and the second system 359 may perform substantially the same or similar operations as those described with reference to FIG. 3A and thus an overlapping description will be omitted.

The processor 320 according to an embodiment may be included in the first circuit board 32 and may be included as a portion of the first system 319 or separately. The processor 320 according to an embodiment may be referred to as at least one processor. The electronic device 401 according to an embodiment may include multiple processors (e.g., a first processor and a second processor), the first processor (e.g., the processor 320) may be included in the first circuit board 32 as a portion of the first system 319 or separately, and the second processor (not shown) may be included in the second circuit board 34 as a portion of the second system 359 or separately.

The processor 320 (e.g., the processor 120 in FIG. 1) according to an embodiment may control overall operations of the electronic device 401 and may control an operation related to charging/discharging of the first battery 310 and the second battery 350.

The processor 320 according to an embodiment may identify a discharge state or a charge state of the electronic device 401. The processor 320 according to an embodiment, based on the discharge state of the electronic device 401, may control the first fuel gauge 316 to provide the power of the first battery 310 to the at least one first electric component(or the first system 319) and control the second fuel gauge 356 to provide the power of the second battery 350 to the at least one second electrical component(or the second system 359). The processor 320 according to an embodiment, based on the charge state of the electronic device 401, control the charging circuitry 317 to provide input power to the first fuel gauge 316 and the second fuel gauge 356 and control the first fuel gauge 316 to provide the power provided through the charging circuitry 317 to the first battery 310, and control the second fuel gauge 356 to provide the power provided through the charging circuitry 317 to the second battery 350.

The processor 320 according to an embodiment may receive a first interrupt signal corresponding to a first overcurrent related to the first battery 310 from the first fuel gauge 316. The processor 320 according to an embodiment may receive a second interrupt signal corresponding to a second overcurrent related to the second battery 350 from the second fuel gauge 356.

Based on receiving the first interrupt signal and/or the second interrupt signal, the processor 320 according to an embodiment may lower clock speed to lower the first overcurrent and/or the second overcurrent. In case of receiving the first interrupt signal and/or the second interrupt signal, the processor 320 according to an embodiment may perform a designated control function for reducing a magnitude of a current consumed by the first system 319 and/or the second system 359 to lower the first overcurrent and/or the second overcurrent. For example, the designated may include a display brightness control function, a motor control function, and/or a control function for a charging current supplied to an external electronic device (e.g., the OTG device), and may further include other functions to reduce the magnitude of current consumed by the electronic device 401.

The processor 320 according to an embodiment may lower clock speed (or clock frequency) based on the first interrupt signal and/or the second interrupt signal to reduce an amount of a current consumed by the processor 320. The processor 320 according to an embodiment may lower brightness of a display (e.g., the display 160 in FIG. 1) (e.g., LCD) based on the first interrupt signal and/or the second interrupt signal to reduce an amount of a current consumed by the processor 160. The processor 320 according to an embodiment may lower driving speed of a motor for extending or reducing the display 560 (e.g., a flexible display) of the electronic device 401 based on the first interrupt signal and/or the second interrupt signal to reduce an amount of a current consumed by the motor. The processor 320 according to an embodiment may lower a magnitude of a charging current supplied to the external electronic device (e.g., the OTG device) connected to the electronic device 401 based on the first interrupt signal and/or the second interrupt signal.

An electronic device (e.g, the electronic device 101 in FIG. 1, the electronic device 301 in FIG. 3A, or the electronic device 401 in FIG. 4) according to an embodiment may include a first battery (e.g, the first battery 310 in FIG. 3A or FIG. 4), a second battery (e.g, the second battery 350 in FIG. 3A or FIG. 4), charging circuitry (e.g, the charging circuitry 317 in FIG. 4), a processor (e.g, the processor 320 in FIG. 4), a first fuel gauge (e.g, the first fuel gauge 316 in FIG. 4) connected to the first battery and the charging circuitry, monitoring usage state information with respect to the first battery, and including a first switch (e.g, the first switch 315 in FIG. 4) for charging or discharging the first battery, and a second fuel gauge (e.g, the second fuel gauge 356 in FIG. 4) connected to the second battery and the charging circuitry, monitoring usage state information with respect to the second battery, and including a second switch (e.g, the second switch 355 in FIG. 4) for charging or discharging the second battery. In the electronic device according to an embodiment, the processor is configured to control the first fuel gauge to provide power of the first battery to a at least one first electric component (e.g, the first system 319 in FIG. 4) through the first switch. In the electronic device according to an embodiment, the processor is configured to control the second fuel gauge to provide power of the second battery to at least one second electric component (e.g, the second system 359 in FIG. 4) through the second switch.

The electronic device according to an embodiment may further include a first circuit board (e.g, the first circuit board 32 in FIG. 3A or FIG. 4), a second circuit board (e.g, the second circuit board 34 in FIG. 3A or FIG. 4), and a connector (e.g, the connector part 37 in FIG. 3A or FIG. 4) for connecting the first circuit board and the second circuit board. In the electronic device according to an embodiment, the charging circuitry, the first battery and the first fuel gauge may be disposed on the first circuit board and the second battery and the second fuel gauge may be disposed on the second circuit board.

The electronic device according to an embodiment may further include a first housing (710 in FIG. 7 or 810 in FIG. 8) and a second housing (720 in FIG. 7 or 820 in FIG. 7). In the electronic device according to an embodiment, the first circuit board is disposed in the first housing, the second circuit board is disposed in the second housing, and the first circuit board is connected to the second circuit board through a flexible printed circuit board (FPCB). In the electronic device according to an embodiment, the processor is further configured to, based on a discharge state of the electronic device, control the first fuel gauge to provide the power of the first battery to the at least one first electric component and control the second fuel gauge to provide the power of the second battery to the at least one second electrical component. In the electronic device according to an embodiment, the processor is further configured to, based on a charge state of the electronic device, control the charging circuitry to provide input power to the first fuel gauge and the second fuel gauge and control the first fuel gauge to provide the power provided through the charging circuitry to the first battery, and control the second fuel gauge to provide the power provided through the charging circuitry to the second battery.

The electronic device according to an embodiment, wherein the first fuel gauge may transmit a first interrupt signal corresponding to a first overcurrent related to the first battery to the processor, and the second fuel gauge may transmit a second interrupt signal corresponding to a second overcurrent related to the second battery to the processor.

The processor according to an embodiment may be configured to perform a designated function based on the first interrupt signal corresponding to the first overcurrent related to the first battery or the second interrupt signal corresponding to the second overcurrent related to the second battery.

The first fuel gauge according to an embodiment further comprises control circuitry (e.g, the control circuitry 318 in FIG. 3b). The control circuitry according to an embodiment is configured to control the first switch based on a comparison between a first voltage of the first battery and a voltage corresponding to a designated discharge allowable current when the first battery is discharged and control the first switch based on a comparison between a second voltage of the first battery and a voltage corresponding to a designated charge allowable current when the first battery is charged.

The processor according to an embodiment may be configured to lower clock speed based on the first interrupt signal corresponding to the first overcurrent related to the first battery or the second interrupt signal corresponding to the second overcurrent related to the second battery.

The electronic device according to an embodiment may further include a display, wherein the processor may be configured to lower brightness of the display based on the first interrupt signal corresponding to the first overcurrent related to the first battery or the second interrupt signal corresponding to the second overcurrent related to the second battery.

The electronic device according to an embodiment may further include a motor, wherein the processor may be configured to lower a speed of the motor based on the first interrupt signal corresponding to the first overcurrent related to the first battery or the second interrupt signal corresponding to the second overcurrent related to the second battery.

The electronic device according to an embodiment may further include interface (e.g., an on the go (OTG) connection part) (e.g., the connecting terminal 178 of the FIG. 1), wherein while a charging current is being supplied to an external OTG device connected the electronic device through the OTG connection part, the processor may be configured to lower a magnitude of the charging current supplied to the interface based on the first interrupt signal corresponding to the first overcurrent related to the first battery or the second interrupt signal corresponding to the second overcurrent related to the second battery.

According to an embodiment, the first interrupt signal corresponding to the first overcurrent related to the first battery or the second interrupt signal corresponding to the second overcurrent related to the second battery may correspond to a general purpose input output interrupt request (GPIO IRQ) signal.

An electronic device (e.g, the electronic device 101 in FIG. 1, the electronic device 301 in FIG. 3A, or the electronic device 401 in FIG. 4) according to an embodiment may include a first circuit board (e.g, the first circuit board 32 in FIG. 3A or FIG. 4), a second circuit board (e.g, the second circuit board 34 in FIG. 3A or FIG. 4), a connector (e.g, the connector 37 in FIG. 3A or FIG. 4) configured to connect the first circuit board and the second circuit board, a first battery (e.g, the first battery 310 in FIG. 3A or FIG. 4), a second battery (e.g, the second battery 350 in FIG. 3A or FIG. 4), charging circuitry (e.g, the charging circuitry 317 in FIG. 4), a first fuel gauge (e.g, the first fuel gauge 316 in FIG. 4) connected to the first battery and the charging circuitry and including a first switch (e.g, the first switch 315 in FIG. 4) for charging or discharging the first battery, and a second fuel gauge (e.g, the second fuel gauge 356 in FIG. 4) connected to the second battery and the charging circuitry and including a second switch (e.g, the second switch 355 in FIG. 4) for charging or discharging the second battery. In the electronic device according to an embodiment, the first fuel gauge is configured to provide power of the first battery to a at least one first electric component (e.g, the first system 319 in FIG. 4) through the first switch and the second fuel gauge is configured to provide power of the second battery to at least one second electric component (e.g, the second system 359 in FIG. 4) through the second switch. In the electronic device according to an embodiment, the first battery and the first fuel gauge are disposed on the first circuit board, the second battery and the second fuel gauge are disposed on the second circuit board. In the electronic device according to an embodiment, the first fuel gauge is configured to provide power of the first battery to a at least one first electric component (e.g, the first system 319 in FIG. 4) through the first switch and the second fuel gauge is configured to provide power of the second battery to at least one second electric component (e.g, the second system 359 in FIG. 4) through the second switch.

An electronic device (e.g, the electronic device 101 in FIG. 1, the electronic device 301 in FIG. 3A, or the electronic device 401 in FIG. 4) according to an embodiment may include a first housing (e.g, the first housing 710 in FIG. 7), a second housing (e.g, the second housing 720 in FIG. 7) rotatably connected with the first housing, a first circuit board (e.g, the first circuit board 32 in FIG. 3A or FIG. 4) disposed in the first housing, a second circuit board (e.g, the second circuit board 34 in FIG. 3A or FIG. 4) disposed in the second housing, a connector (e.g, the connector 37 in FIG. 3A or FIG. 4) configured to connect the first circuit board and the second circuit board, a first battery (e.g, the first battery 310 in FIG. 3A or FIG. 4) disposed in the first housing, a second battery (e.g, the second battery 350 in FIG. 3A or FIG. 4) disposed in the second housing, a first fuel gauge (e.g, the first fuel gauge 316 in FIG. 4) disposed on the first circuit board, connected to the first battery and comprising a first switch (e.g, the first switch 315 in FIG. 4)for charging or discharging the first battery, and a second fuel gauge (e.g, the second fuel gauge 356 in FIG. 4) disposed on the second circuit board, connected to the second battery and comprising a second switch (e.g, the second switch 355 in FIG. 4) for charging or discharging the second battery. In the electronic device according to an embodiment, the first fuel gauge is configured to provide power of the first battery to a at least one first electric component (e.g, the first system 319 in FIG. 4) through the first switch and the second fuel gauge is configured to provide power of the second battery to at least one second electric component (e.g, the second system 359 in FIG. 4) through the second switch. In the electronic device according to an embodiment, a first display (e.g, the display 730 in FIG. 7) may be disposed on a first surface of the first housing and a third surface of the second housing, and a second display (e.g, the display 870 in FIG. 8)may be disposed on a second surface of the first housing. In the electronic device according to an embodiment, the first display may be a flexible display.

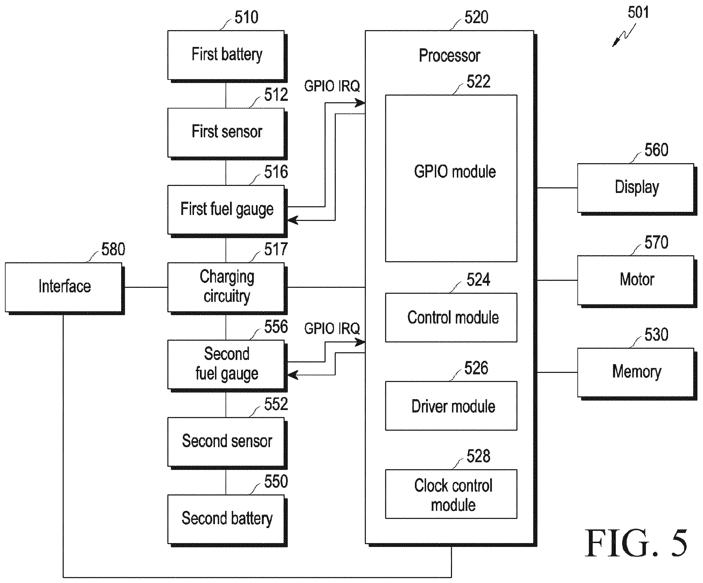

FIG. 5 is a block diagram illustrating an electronic device according to an embodiment.

Referring to FIG. 5, the electronic device 501 (e.g., the electronic device 101 in FIG. 1 or the electronic device 401 FIG. 4) may include a first battery 510, a second battery 550, charging circuitry 517, a first sensor 512, a second sensor 552, a first fuel gauge 516, a second fuel gauge 556, a processor (or at least one processor) 520, a memory 530, a display 560, a motor 570, and an interface 580. Without limitation thereto, the electronic device 501 may be configured to additionally include various components or omit some of the components. The electronic device 501 according to an embodiment may further include the entirety or some of the electronic device 101 shown in FIG. 1.

The first battery 510, the second battery 550, the charging circuitry 517, the first sensor 512, the second sensor 552, the first fuel gauge 516, and the second fuel gauge 556 in the electronic device 501 according to an embodiment may perform the same operations as those of the first battery 310, the second battery 350, the first sensor 312, the second sensor 352, the first fuel gauge 316, and the second fuel gauge 356 described with reference to FIG. 3A, and an overlapping description thereof will be omitted.

The processor 520 according to an embodiment may receive a first interrupt signal corresponding to a first overcurrent related to the first battery 510 from the first fuel gauge 516. The processor 520 according to an embodiment may receive a second interrupt signal corresponding to a second overcurrent related to the second battery 520 from the second fuel gauge 556. In case of receiving the first interrupt signal and/or the second interrupt signal, the processor 520 according to an embodiment may perform a designated control function for reducing a magnitude of a current consumed through at least one component or module (e.g., the processor 520, the display 560, the motor 570, and/or interface 580) included in the electronic device 501 to lower the first overcurrent and/or the second overcurrent.

The processor 520 according to an embodiment may include a general purpose input output (GPIO) module 522, a control module 524, a driver module 526, and a clock control module 528. The GPIO module 522 according to an embodiment may receive a first interrupt signal (a GPIO interrupt request (IRQ)) corresponding to a first overcurrent related to the first battery 510 from the first fuel gauge 516. The GPIO module 522 according to an embodiment may receive a second interrupt signal (a GPIO interrupt request (IRQ)) corresponding to a second overcurrent related to the second battery 520 from the second fuel gauge 556. In case of receiving the first interrupt signal and/or the second interrupt signal, the control module 524 according to an embodiment may perform a designated control function for reducing a magnitude of a current consumed by at least one component or module (e.g., the processor 520, the display 560, the motor 570, and/or the interface 580) included in the electronic device 501 to lower the first overcurrent and/or the second overcurrent. The driver module 526 according to an embodiment may include a motor driver, a display driver, and/or an OTG driver and may perform a driving operation for a designated control function related to the display 560, the motor 570, or the interface 580, based on control of the control module 524. The clock control module 528 according to an embodiment may lower clock speed (or clock frequency) of the processor 520 less than a designated clock speed based on control of the control module 524.

The display 560 according to an embodiment may lower brightness less than a designated brightness based on performing of a designated control function of the control module 524 (or the driver module 526).

The motor 570 according to an embodiment may lower a driving speed of a motor for extending or reducing the display 560 (e.g., a flexible display) less than a designated driving speed based on performing of a designated control function of the control module 524 (or the driver module 526).

The interface 580 according to an embodiment may include an external device connection part. According to an embodiment, the interface 580 may include OTG connection part for connecting with an external OTG device (not shown). According to an embodiment, the control module 524 (or the driver module 526) may control the charging circuit 517 to lower a magnitude of a charging current supplied to the external OTG device based on performing of a designated function of the processor 520.

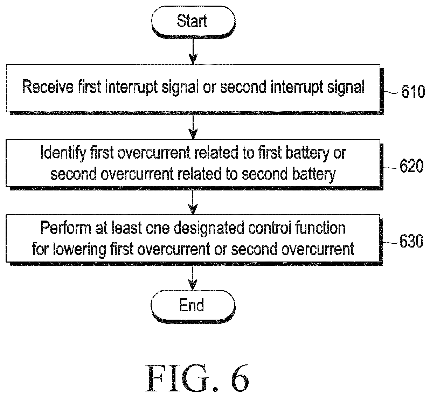

FIG. 6 is a flowchart of a method for controlling power based on multiple batteries in an electronic device according to an embodiment.

Referring to FIG. 6, a processor (e.g., the processor 120 in FIG. 1, the processor 320 in FIG. 4, or the processor 520 in FIG. 5) (or at least one processor) of the electronic device (e.g., the electronic device 101 in FIG. 1, the electronic device 301 in FIG. 3A, the electronic device 401 in FIG. 4, or the electronic device 501 in FIG. 5) may perform at least one of operation 610 to operation 630.

In operation 610, the processor 520 according to an embodiment may receive a first interrupt signal corresponding to a first overcurrent related to the first battery 510 from the first fuel gauge 516 and a second interrupt signal corresponding to a second overcurrent related to the second battery 520 from the second fuel gauge 556. The processor 520 according to an embodiment may concurrently receive the first interrupt signal and the second interrupt signal. The processor 520 according to an embodiment may receive the first interrupt signal and/or the second interrupt signal included in the first system 319 or the second system 359 as portions thereof. The processor 520 according to an embodiment may include multiple processor such as a first processor (e.g, the processor 320) included in the first system 319 as a portion thereof and a second processor (not shown) included in the second system 359 as a portion thereof, and in this case, the first interrupt signal may be received by the first processor and the second interrupt signal may be received by the second processor.

In operation 620, the processor 520 according to an embodiment may identify the first overcurrent based on the first interrupt signal corresponding to the first overcurrent related to the first battery 510 and the second overcurrent based on the second interrupt signal corresponding to the second overcurrent related to the second battery 520. According to an embodiment, the processor 520 may concurrently identify the first overcurrent and the second overcurrent. The processor 520 according to an embodiment may identify the first overcurrent and/or the second overcurrent respectively based on the first interrupt signal and/or the second interrupt signal included in the first system 319 or the second system 359 as portions thereof. The processor 520 according to an embodiment may include multiple processor such as a first processor (e.g, the processor 320) included in the first system 319 as a portion thereof and a second processor (not shown) included in the second system 359 as a portion thereof, and in this case, the first processor may identify the first overcurrent based on the first interrupt signal and by the second processor may identify the second overcurrent based on the second interrupt signal.

In operation 630, the processor 520 according to an embodiment may perform a designated function for reducing a magnitude of a current consumed by at least one component or module (e.g., the processor 520, the display 560, the motor 570, and/or the interface 580) included in the electronic device 501 to lower the first overcurrent or the second overcurrent. The processor 520 according to an embodiment may be included in the first system 319 or the second system 359 as a portion thereof and may perform a designated function for reducing a magnitude of a current consumed by the first system 319 and/or the second system 359 to lower the first overcurrent or the second overcurrent. The processor 520 according to an embodiment may include multiple processor such as a first processor (e.g, the processor 320) included in the first system 319 as a portion thereof and a second processor (not shown) included in the second system 359 as a portion thereof, and in this case, the first processor may perform a designated function for lowering the first overcurrent and the second processor may perform a designated function for lowering the second overcurrent.

The processor 520 according to an embodiment may control to lower clock speed of the processor 520 based on the first interrupt signal and/or the second interrupt signal. The processor 520 according to an embodiment may control to lower brightness of the display 560 based on the first interrupt signal and/or the second interrupt signal. The processor 520 according to an embodiment may lower a driving speed of the motor 570 for extending or reducing the display 560 (e.g., a flexible display) based on the first interrupt signal and/or the second interrupt signal. According to an embodiment, the processor 520 may control to lower a magnitude of a charging current supplied to an on the go (OTG) device connected to the electronic device 501 based on the first interrupt signal and/or the second interrupt signal.

A method for controlling power based on multiple batteries in an electronic device according to an embodiment may include an operation of receiving a first interrupt signal corresponding to a first overcurrent related to a first battery from a first fuel gauge or a second interrupt signal corresponding to a second overcurrent related to a second battery from a second fuel gauge. The method according to an embodiment may include an operation of identifying the first overcurrent based on the first interrupt signal corresponding to the first overcurrent related to the first battery or identifying the second overcurrent based on the second interrupt signal corresponding to the second overcurrent related to the second battery. The method according to an embodiment may include an operation of performing a designated function based on the identification of the first overcurrent or the second overcurrent.

The performing the designated function of the method according to an embodiment may include an operation of lowering clock speed of the electronic device.

The performing the designated function of the method according to an embodiment may include an operation of lowering brightness of a display of the electronic device. The performing the designated function of the method according to an embodiment may include an operation of lowering a speed of a motor of the electronic device. The performing the designated function of the method according to an embodiment may include an operation of reducing a magnitude of a charging current supplied to an external OTG device connected with the electronic device when the charging current is being provided through interface to the external OTG device from the electronic device.

In the method according to an embodiment, the first interrupt signal corresponding to the first overcurrent related to the first battery or the second interrupt signal corresponding to the second overcurrent related to the second battery may correspond to a general purpose input output interrupt request (GPIO IRQ) signal.

FIG. 7 to FIG. 9 are views illustrating a foldable electronic device including a first circuit board, a second circuit board, a first battery, and a second battery according to an embodiment.

FIG. 7 is a view illustrating a flat state of a foldable electronic device according to an embodiment. FIG. 7 illustrates a flat state of the electronic device 700 (e.g., the electronic device 101 in FIG. 1, the electronic device 301 in FIG. 3A, the electronic device 401 in FIG. 4, or the electronic device 501 in FIG. 5) with reference to a specific folding direction according to an embodiment.

Referring to FIG. 7, the electronic device 700 may include a pair of housing structures 710 and 720 (e.g., a foldable housing structure) rotatably coupled to each other around folding axis B through a hinge structure 760 to be folded with respect to each other and a display 730 (e.g., a flexible display or a foldable display) disposed in a space formed by the pair of housing structures 710 and 720. According to an embodiment, in the flat state of the electronic device 700 in FIG. 7, the display 730 may be configured to have a second shape different from a first shape. By way of example, the second shape may include a second screen ratio (16:9) different from a first screen ratio (e.g., 4:3).

According to an embodiment, a first housing structure 710 and a second housing structure 720 may be disposed on opposite sides around folding axis B (e.g., a folding axis in a horizontal direction).

According to an embodiment, a first circuit board (e.g, the first circuit board 22 in FIG. 2 or the first circuit board 32 in FIG. 3 and FIG. 4) may be disposed in a space formed by the first housing structure 710. According to an embodiment, a second circuit board (e.g, the second circuit board 24 in FIG. 2 or the second circuit board 34 in FIG. 3 and FIG. 4) may be disposed in a space formed by the second housing structure 720. According to an embodiment, a connector (e.g, the connector 26 and 28 in FIG. 2 or the connector 37 in FIG. 3 and FIG. 4) may be disposed in at least part of a space formed by the hinge structure 720 between the first housing structure 710 and the second housing structure 720.

According to an embodiment, the first housing structure 710, unlike the second housing structure 720, may additionally include an area in which a camera 714 and various sensors 715 are disposed, but may have a symmetrical shape to the second housing structure in other areas. For another embodiment, the area in which the camera 714 and the various sensors 715 are disposed may be additionally disposed on at least a partial area of the second housing structure 720 or replaced.

For another embodiment, at least some of the camera 714 and the various sensors 715 may be disposed on at least a partial area of the first housing 710 and the other of the same may be disposed on at least a partial area of the second housing structure 720.

According to an embodiment, in the flat state of the electronic device 700, the first housing structure 710 may include a first surface 711 disposed to face the front surface of the electronic device 700, a second surface 712 facing a direction opposite to the first surface 711, and a first lateral member 713 surrounding at least a portion of a space between the first surface 711 and the second surface 712.

According to an embodiment, in the flat state of the electronic device 700, the second housing structure 720 may include a third surface 721 disposed to face the front surface of the electronic device 700, a fourth surface 722 facing a direction opposite to the third surface 721, and a second lateral member 723 surrounding at least a portion of a space between the third surface 721 and the fourth surface 722.

According to an embodiment, the camera module 714 may be exposed to the front surface of the electronic device 700 through an opening formed through one side of the first housing structure 710. The sensors 715 may include at least one of a proximity sensor, a light sensor, an iris recognition sensor, an ultrasonic sensor, or an indicator. By way of example, the sensors 715 may be exposed to the front surface of the electronic device 700 through an opening formed through one corner of the first housing structure 710 or may be disposed at a lower end of at least a partial area of the display 730.

According to various embodiments, the first housing structure 710 may include a receiver 716 disposed through at least a partial area thereof. In an embodiment, although not shown in the drawing, the electronic device 700 may include an ear jack hole, an external speaker module, a SIM card tray, an interface connector port, or at least one key button disposed through the first housing structure 710 and/or the housing structure 720.

According to an embodiment, an angle or a distance between the first housing structure 710 and the second housing structure 720 may vary according to a flat state, a folded state (e.g., a state in FIG. 8 to be described below), or an intermediate state of the electronic device 700. Without limitation to the description above, a closed state, an open state, and a half-folded state of the electronic device may be determined according to an angle between the first housing structure 710 and the second housing structure 720, and a description thereof will be given below. The description of the state may be replaced with a description of a mode.

According to an embodiment, depending on the angle between the first housing structure 710 and the second housing structure 720, the state (e.g., the flat state, the folded state, and the intermediate state) of the electronic device may be determined and depending on the state (e.g., a state of the housings, a state of the hinge, or a curved state of a flexible display) of the electronic device, an operation of display an execution screen of an application may be performed. The operation of displaying an execution screen of an application according to a state of the electronic device will be described below.

According to an embodiment, the electronic device 700 may include a first motion sensor 740 and a magnetic body (e.g., a magnet) 742 disposed on at least a portion of the first housing structure 710. According to an embodiment, the first motion sensor 740 may be a combination of at least two of an acceleration sensor, an angular velocity sensor (e.g., a gyro sensor), or a geomagnetic sensor. By way of example, the electronic device 700 may detect a pose or a gesture of the first housing structure 710 through the first motion sensor 740. For example, the pose of the first housing structure 710 may be detected based on an acceleration sensor of the first motion sensor 740 and the gesture of the first housing structure 710 may be detected based on an angular velocity sensor of the first motion sensor 740. According to an embodiment, the magnetic body 742 may be disposed on at least a portion of the first housing structure 710 adjacent to the hinge structure 760.

According to an embodiment, the electronic device 700 may include a second motion sensor 750 and a magnetic sensor module 752 disposed on at least a portion of the second housing structure 720. According to an embodiment, the second motion sensor 750 may be a combination of at least two of an acceleration sensor, an angular velocity sensor (e.g., a gyro sensor), or a geomagnetic sensor. By way of example, the electronic device 700 may detect a pose of the second housing structure 720 through an acceleration sensor of the second motion sensor 750 and detect a gesture of the second housing structure 720 through an angular velocity sensor of the second motion sensor 750. According to an embodiment, the magnetic sensor module 752 may be disposed on at least a portion of the second housing structure 720 adjacent to the hinge structure 760. For example, as shown in FIG. 8, at least portions of the magnetic body 742 of the first housing structure 710 and the magnetic sensor module 752 of the second housing structure 720 may be disposed to face each other in the folded state of the electronic device 700.

FIG. 8 is a view illustrating a folded state of a foldable electronic device according to an embodiment.

According to an embodiment, the electronic device 800 may include a pair of housing structures 810 and 820 (e.g., a foldable housing structure) rotatably coupled to each other around folding axis B (e.g., a folding axis in a horizontal direction) through a hinge structure 860 to be folded with respect to each other and a display 730 (e.g., a flexible display or a foldable display) disposed in a space formed by the pair of housing structures 810 and 820.

According to an embodiment, a sensor may include a rear camera device 872 and/or a proximity sensor 874. According to an embodiment, at least a portion of a sub display 870 may be visually exposed through a rear surface 812 of the first housing structure 810.

According to an embodiment, one or more components may be arranged at or visually exposed through the rear surface of the electronic device 800. According to an embodiment, one or more of components or sensors may be visually exposed through a rear surface (a second surface) 812 of the first housing structure 810. A sensor may include a rear camera device 872 and/or a proximity sensor 874. According to an embodiment, at least a portion of a sub display 870 may be visually exposed through a rear surface 812 of the first housing structure 810.

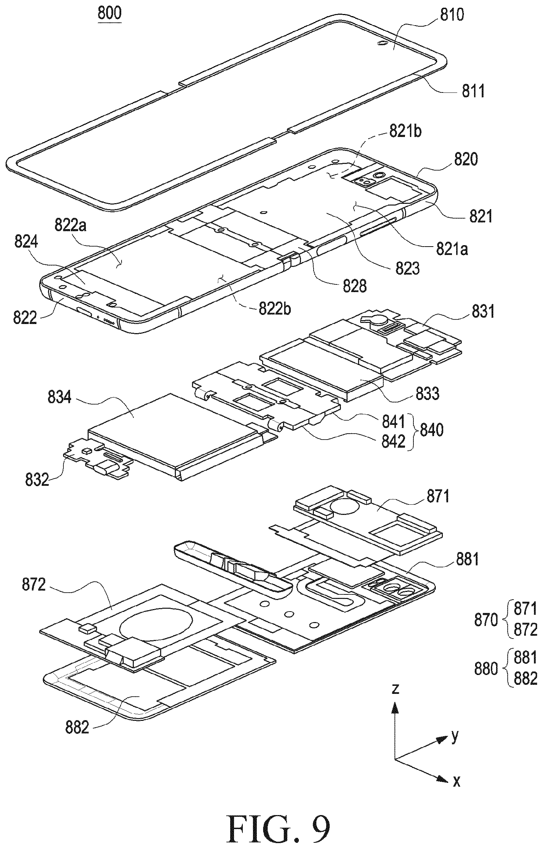

FIG. 9 is an exploded perspective view illustrating a foldable electronic device 800 (e.g., the electronic device 800 in FIG. 8) according to an embodiment.

Referring to FIG. 9, the electronic device 800 according to an embodiment may include a display 810 (e.g., the display module 160 in FIG. 1 or the display 560 in FIG. 5), a foldable housing 820 (e.g., the first housing structure 810 and the second housing structure 820 in FIG. 8), a first printed circuit board 831 (e.g, the first circuit board 22 in FIG. 2 or the first circuit board 32 in FIG. 3A and FIG. 4), a second printed circuit board 832(e.g, the second circuit board 24 in FIG. 2 or the second circuit board 34 in FIG. 3A and FIG. 4), a hinge structure 840, an antenna module 870, and a rear cover 880. A detailed description of components (e.g., the display 810, the foldable housing 820, and the rear cover 880) overlapping FIG. 8 will be omitted.

According to an embodiment, the display 810 may be exposed to outside through a substantial portion of a front plate 811. In some embodiments, a shape of the display 810 may be formed to be substantially identical to a shape of an edge of the front plate 811.

According to an embodiment, the foldable housing 820 may include a first housing 821 and a second housing 822. According to an embodiment, the first housing 821 may include a first surface 821a and a second surface 821b facing a direction opposite to the first surface 821a, and the second housing 822 may include a third surface 822a and a fifth surface 822b facing a direction opposite to the third surface 822a. The foldable housing 820 may additionally or alternatively include a bracket assembly. The bracket assembly may include a first bracket assembly 823 disposed on the first housing structure 821 and a second bracket assembly 824 disposed on the second housing structure 822. A portion 825 including at least a portion of the bracket assembly, for example, at least a portion of the first bracket assembly 823 and at least a portion of the second bracket assembly 824 may function as a plate for supporting the hinge structure 840.

According to an embodiment, various electrical elements may be disposed on at least part of the first printed circuit board 831 and the second printed circuit board 832. For example, a processor (e.g., the processor 120 in FIG. 1, the processor 320 in FIG. 4, or the processor 520 in FIG. 5), a memory (e.g., the memory 130 in FIG. 1 or the memory 530 in FIG. 5), and/or an interface (e.g., the interface 177 in FIG. 1 or the interface 580 in FIG. 5) may be mounted on at least part of the first printed circuit board 831 and the second printed circuit board 832. The processor may include one or more of, for example, a central processing unit, an application processor, a graphic processing unit, an image signal processor, a sensor herb processor, or a communication processor. The memory may include, for example, a transitory memory or a non-transitory memory. The interface may include, for example, a high-definition multimedia interface (HDMI), a universal serial bus (USB) interface, a SD card interface, and/or an audio interface. The interface may electrically or physically connect the electronic device 300 to an external electronic device, and may include, for example, a USB connector, SD card/MMC connector, or an audio connector.

According to an embodiment, the first printed circuit board 831 may be disposed on the first bracket assembly 823 side and the second printed circuit board 832 may be disposed on the second bracket assembly 824 side. The first printed circuit board 831 and the second printed circuit board 832 may be disposed in a space formed by the foldable housing 820, the bracket assembly, a first rear cover 881 and/or a second rear cover 882. Components for implementing various functions of the electronic device 800 may be separately mounted on each of the first printed circuit board 831 and the second printed circuit board 832. For example, a processor (e.g., the processor 320 in FIG. 4 or the processor 520 in FIG. 5) may be disposed on the first printed circuit board 831 and an audio interface may be disposed on the second printed circuit board 832.

According to various embodiments, a plurality of batteries for supplying power to the electronic device 800 may be disposed adjacent to the first printed circuit board 831 and the second printed circuit board 832. According to an embodiment, a first battery 833 (e.g., the first battery 210 in FIG. 2, the first battery 310 in FIG. 3A and FIG. 4, or the first battery 510 in FIG. 5) may be disposed on a substantially identical plane or adjacent to the first printed circuit board 831 and a second battery 834 (e.g., the second battery 250 in FIG. 2, the second battery 350 in FIG. 3A and FIG. 4, or the second battery 550 in FIG. 5) may be disposed on a substantially identical plane or adjacent to the second printed circuit board 832. The battery is a device for supplying power to at least one component of the electronic device 800, and may include, for example, a non-rechargeable primary battery, or a rechargeable secondary battery, or a fuel cell. The battery may be disposed and integrally formed in the electronic device 800 or may be disposed to be attachable to/detachable from the electronic device 800.

According to an embodiment, the hinge structure 840 may be configured to support the foldable housing 820 and/or the bracket assembly so that the foldable housing 820 may rotate around a folding axis (e.g., B in FIG. 7). The hinge structure 840 may include a first hinge structure 841 disposed on the first printed circuit board 831 side and a second hinge structure 842 disposed on the second printed circuit board 832 side. The hinge structure 840 may be disposed between the first printed circuit board 831 and the second printed circuit board 832. According to an embodiment, the hinge structure 840 may be integrally formed with the portion 825 including at least a portion the first bracket assembly 823 and at least a portion of the second bracket assembly 824.

According to an embodiment, the antenna module 870 may be disposed between the rear cover 880 and the first battery 833 or the second battery 834. The antenna module 870 may include, for example, a near field communication (NFC) antenna, a wireless charging antenna, and/or a magnetic secure transmission (MST) antenna. The antenna module 870 may wirelessly transmit and receive power required for charging or perform near field communication with an external device, for example. In another embodiment, an antenna structure may be formed of a part or a combination of a lateral bezel structure of the foldable housing 820 and/or the bracket assembly.

According to an embodiment, the rear cover 880 may include a first rear cover 881 and a second rear cover 882. The rear cover 880 may be combined with the foldable housing 820 to serve to protect components (e.g., the first printed circuit board 831 and the second printed circuit board 832, the battery, and the antenna module 870) described above and disposed in the foldable housing 820. As described above, the rear cover 880 may be substantially integrally formed with the foldable housing 820.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, a non-transitory recording medium storing instructions which, when executed by an electronic device, cause the electronic device to perform at least one operation, wherein the at least one operation may include an operation of receiving a first interrupt signal corresponding to a first overcurrent related to a first battery from a first fuel gauge or a second interrupt signal corresponding to a second overcurrent related to a second battery from a second fuel gauge, an operation of identifying the first overcurrent based on the first interrupt signal corresponding to the first overcurrent related to the first battery or identifying the second overcurrent based on the second interrupt signal corresponding to the second overcurrent related to the second battery, and an operation of performing a designated function based on the identification of the first overcurrent or the second overcurrent.

According to an embodiment, each component (e.g., a module or a program) of the above-described components may include a single entity or multiple entities, and some of the multiple entities may be separately disposed in different components. According to an embodiment, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (401) comprising:
a first battery (310);
a second battery (350);
charging circuitry (317);
a processor (320);
a first fuel gauge (316) connected to the first battery and the charging circuitry, monitoring usage state information with respect to the first battery, and comprising a first switch (315) for charging or discharging the first battery; and
a second fuel gauge (356) connected to the second battery and the charging circuitry, monitoring usage state information with respect to the second battery, and comprising a second switch (355) for charging or discharging the second battery,
wherein the processor is configured to control the first fuel gauge to provide power of the first battery to at least one first electrical component (319) through the first switch, and to control the second fuel gauge to provide power of the second battery to at least one second electrical component (359) through the second switch.

2. The electronic device of claim 1, further comprising:
a first circuit board;
a second circuit board; and
a connector configured to connect the first circuit board and the second circuit board,
wherein the charging circuitry, the first battery, the first fuel gauge, and the at least one first electrical component are disposed on the first circuit board, and the second battery, the second fuel gauge, and the at least one second electrical component are disposed on the second circuit board.

3. The electronic device of claim 1 or 2, further comprising:
a first housing (710, 810); and
a second housing (720, 820),
wherein the first circuit board is disposed in the first housing, the second circuit board is disposed in the second housing, and the first circuit board is connected to the second circuit board through a flexible printed circuit board (FPCB),
wherein the processor is further configured to:
based on a discharge state of the electronic device, control the first fuel gauge to provide the power of the first battery to the at least one first electric component and control the second fuel gauge to provide the power of the second battery to the at least one second electrical component, and
based on a charge state of the electronic device, control the charging circuitry to provide input power to the first fuel gauge and the second fuel gauge and control the first fuel gauge to provide the power provided through the charging circuitry to the first battery, and control the second fuel gauge to provide the power provided through the charging circuitry to the second battery.

4. The electronic device of any one of claims 1 to 3,
wherein the first fuel gauge further comprises control circuitry (318), and
wherein the control circuitry is configured to control the first switch based on a comparison between a first voltage of the first battery and a voltage corresponding to a designated discharge allowable current when the first battery is discharged and control the first switch based on a comparison between a second voltage of the first battery and a voltage corresponding to a designated charge allowable current when the first battery is charged.

5. The electronic device of any one of claims 1 to 4,
wherein the first fuel gauge is configured to transmit a first interrupt signal corresponding to a first overcurrent related to the first battery to the processor, and
the second fuel gauge is configured to transmit a second interrupt signal corresponding to a second overcurrent related to the second battery to the processor.

6. The electronic device of claims 1 to 5,
wherein the processor is configured to lower clock speed based on the first interrupt signal corresponding to the first overcurrent related to the first battery or the second interrupt signal corresponding to the second overcurrent related to the second battery.

7. The electronic device of any one of claims 1 to 6, further comprising a display,
wherein the processor is configured to lower brightness of the display based on the first interrupt signal corresponding to the first overcurrent related to the first battery or the second interrupt signal corresponding to the second overcurrent related to the second battery.

8. The electronic device of any one of claims 1 to 7, further comprising a motor,
wherein the processor is configured to lower a speed of the motor based on the first interrupt signal corresponding to the first overcurrent related to the first battery or the second interrupt signal corresponding to the second overcurrent related to the second battery.

9. The electronic device of any one of claims 1 to 8, further comprising an interface,
wherein the processor is configured to, while a charging current is being supplied to an external OTG device connected the electronic device through the interface, lower a magnitude of the charging current supplied to the external OTG device based on the first interrupt signal corresponding to the first overcurrent related to the first battery or the second interrupt signal corresponding to the second overcurrent related to the second battery.

10. The electronic device of any one of claims 1 to 9,
wherein the first interrupt signal corresponding to the first overcurrent related to the first battery or the second interrupt signal corresponding to the second overcurrent related to the second battery corresponds to a general purpose input output interrupt request, GPIO IRQ, signal.

11. A method for controlling power based on multiple batteries in an electronic device, the method comprising:
receiving a first interrupt signal corresponding to a first overcurrent related to a first battery from a first fuel gauge or a second interrupt signal corresponding to a second overcurrent related to a second battery from a second fuel gauge;
identifying the first overcurrent based on the first interrupt signal corresponding to the first overcurrent related to the first battery or identifying the second overcurrent based on the second interrupt signal corresponding to the second overcurrent related to the second battery; and
performing a designated function based on the identifying of the first overcurrent or the second overcurrent.

12. The method of claim 11, wherein the performing the designated function comprises lowering clock speed of the electronic device based on the identifying of the first overcurrent or the second overcurrent.

13. The method of claim 11 or 12, wherein the performing the designated function further comprises lowering brightness of a display of the electronic device based on the identifying of the first overcurrent or the second overcurrent, lowering a speed of a motor of the electronic device based on the identifying of the first overcurrent or the second overcurrent, and
reducing a magnitude of a charging current supplied to an external on the go, OTG, device to which a charging current is being provided through the interface, based on the identifying of the first overcurrent or the second overcurrent.

14. The method of any one of claims 11 to 13, wherein the first interrupt signal corresponding to the first overcurrent related to the first battery or the second interrupt signal corresponding to the second overcurrent related to the second battery includes to a general-purpose input output interrupt request, GPIO IRQ, signal.

15. A non-transitory recording medium storing instructions which, when executed by an electronic device, cause the electronic device to perform the method of any one of claims 10-14.
